# EUROPEAN PATENT SPECIFICATION

(11) **EP 4 550 006 B1**
(45) Date of publication and mention of the grant of the patent: **30.09.2026**
(21) Application number: 23207611.7
(22) Date of filing: 03.11.2023
(51) Int. Cl.: G01V 1/38, G01C 13/00

(54) **SEISMIC DATA ACQUISITION DEVICE INCLUDING A DEPTH DETERMINATION SYSTEM AND CORRESPONDING METHOD**
VORRICHTUNG ZUR ERFASSUNG SEISMISCHER DATEN MIT TIEFENBESTIMMUNGSSYSTEM UND ENTSPRECHENDES VERFAHREN
DISPOSITIF D'ACQUISITION DE DONNÉES SISMIQUES COMPRENANT UN SYSTÈME DE DÉTERMINATION DE PROFONDEUR ET PROCÉDÉ CORRESPONDANT

(43) Date of publication of application: 07.05.2025
(73) Proprietor: SERCEL, 44470 Carquefou (FR)
(72) Inventor: BREGEON, Olivier, 44470 Carquefou (FR)
(74) Representative: Ipsilon

(56) References cited:
- CN-A- 116 625 326
- US-A1- 2011 149 681
- US-A1- 2017 082 433
- US-A1- 2023 236 333

## Description

### BACKGROUND

### TECHNICAL FIELD

Embodiments of the subject matter disclosed herein generally relate to a seismic data acquisition device, and to a method for determining the depth at which the seismic data acquisition device, more particularly an ocean bottom node, is placed.

### DISCUSSION OF THE BACKGROUND

Seismic data acquisition and processing may be used to generate a profile (image) of geophysical structures under the ground (subsurface), e.g. for natural resources finding. While this profile does not provide an accurate location e.g. for oil and gas reservoirs, it suggests, to those trained in the field, the presence or absence of such reservoirs. Thus, providing a high-resolution image of the subsurface is important, for example, to those who need to determine where the oil and gas reservoirs are located.

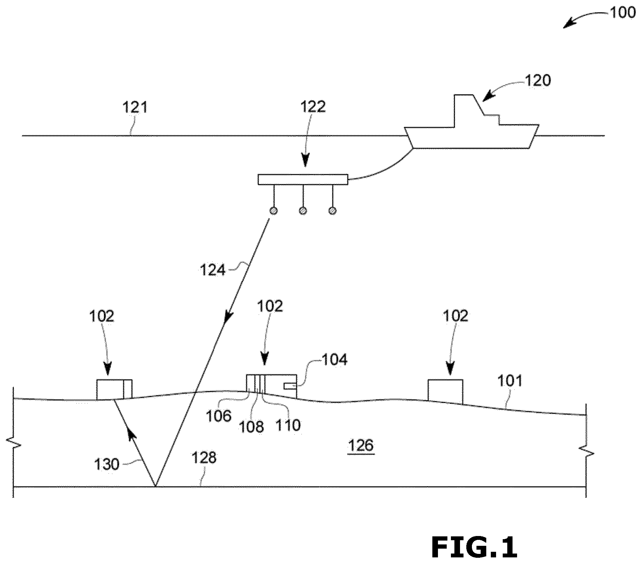

For marine acquisition, such a high-resolution image may be obtained with a seismic acquisition system as now discussed. The seismic acquisition system 100 includes, as illustrated in Figure 1, plural ocean bottom nodes 102 distributed over the ocean bottom 101, by various means. Each ocean bottom node 102 includes a nodal seismic data acquisition system e.g., a hydrophone 104 for detecting a pressure wave, a processor 106 for processing the detected waves, a memory 108 for storing the seismic data, and a power source 110 for providing electrical power to these components.

A vessel 120 tows one or more seismic sources 122 at a certain depth in the water, relative to the ocean surface 121. The seismic source 122 is configured to generate seismic waves 124. The seismic waves 124 propagate into the subsurface 126 and get reflected and/or refracted at various interfaces 128 in the subsurface. The reflected waves 130 are then detected by the hydrophone 104, and recorded in the memory 108 of the ocean bottom node 102.

An example of an Ocean bottom Node (OBN) is disclosed in application WO2021/224683. Document US2023/236333 A1 discloses an ocean bottom seismic node, comprising a modular housing, a multi-axis single-mass acceleration sensor disposed within the modular housing, and a memory disposed within the modular housing and operatively connected to the multi-axis single-mass acceleration to record seismic data.

For reliable and accurate exploitation of the seismic data acquired by said OBN, the actual depth at which an OBN is located should be known. Indeed, the seismic data acquired must be associated with the depth value at which the OBN acquired these data in order to be able to reconstruct an accurate and reliable image profile of geophysical structures under the ground (subsurface).

Besides pinger use, as e.g. in WO2020/208424, a solution is to equip an OBN with a pressure sensor that is sensitive to hydrostatic pressure, to determine the depth at which the OBN is positioned. However, these sensors are expensive and the arrangement that has to be made to provide the OBN with such a pressure sensor can lead to a weakening of the casing what may generate water tightness problems.

The present invention aims to provide a new OBN to overcome all or part of the problems exposed above.

In particular, there is a need to design an improved OBN that enables to reliably determine the depth at which the OBN is positioned without damaging the casing.

### BRIEF SUMMARY OF THE INVENTION

According to an embodiment, there is a seismic data acquisition device according to Claim 1.

The deformation of the casing is function of the water pressure and thus of the deployment depth of the OBN. In particular the hydrostatic pressure increases with water depth. Thus, the measuring of the casing deformation enables to determine the water depth at which the OBN is placed.

The deformation sensor is configured to measure the deformation of said casing caused by the water pressure. The measured deformation is related to water pressure which is related to the depth at which the OBN is located, so that the measured deformation allows for determining the water depth at which the OBN is placed.

This method is not expensive and does not introduce any weakness in the housing of the OBN.

According to another embodiment, there is a seismic data acquisition device according to any one of Claims 2 to 12.

According to another embodiment, there is a method according to Claim 13.

### BRIEF DESCRIPTION OF THE DRAWINGS

For a more complete understanding of the present invention, reference is now made to the following description taken in conjunction with the accompanying drawings, in which:
Figure 1 is a schematic diagram of a seismic data acquisition system that uses ocean bottom nodes as known in the background art;
Figure 2A illustrates an exploded view of an ocean bottom node that has a casing comprising two halves configured to be attached one to the other by an attachment system, according to an embodiment of the invention;
Figure 2B illustrates a sectional view of an ocean bottom node, such as the one of Figure 2A, wherein the casing of the ocean bottom node includes a deformation sensor fixed onto an internal face of a wall of the casing, the wall having an opposed face, referred to as an external face, that is intended to be in contact with water;
Figure 2C illustrates a perspective view of an ocean bottom node, such as the one of Figure 2A or Figure 2B, in an assembled state ;
Figure 3 is a flowchart of a method according to an embodiment of the invention, for assembling an ocean bottom node adapted to determine the depth at which it has been positioned, such as the node of any one of Figures 2A and 2B;
Figure 4 is a flowchart of a method according to an embodiment of the invention, for determining the depth at which an ocean bottom node has been positioned, such as the node of any one of Figures 2A and 2B.

### DETAILED DESCRIPTION OF THE INVENTION

The following description of the embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to an ocean bottom node that records seismic data.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an embodiment, a novel seismic data acquisition device 1, referred to as an ocean bottom node is configured to record seismic data. The data acquisition device 1 has a casing in which electronics is housed and the casing has a wall that has an external face intended to be in contact with water and an opposite internal face to which is attached a deformation sensor. The ocean bottom node is intended to be let on an ocean bottom floor, for acquisition of seismic data. The casing is watertight.

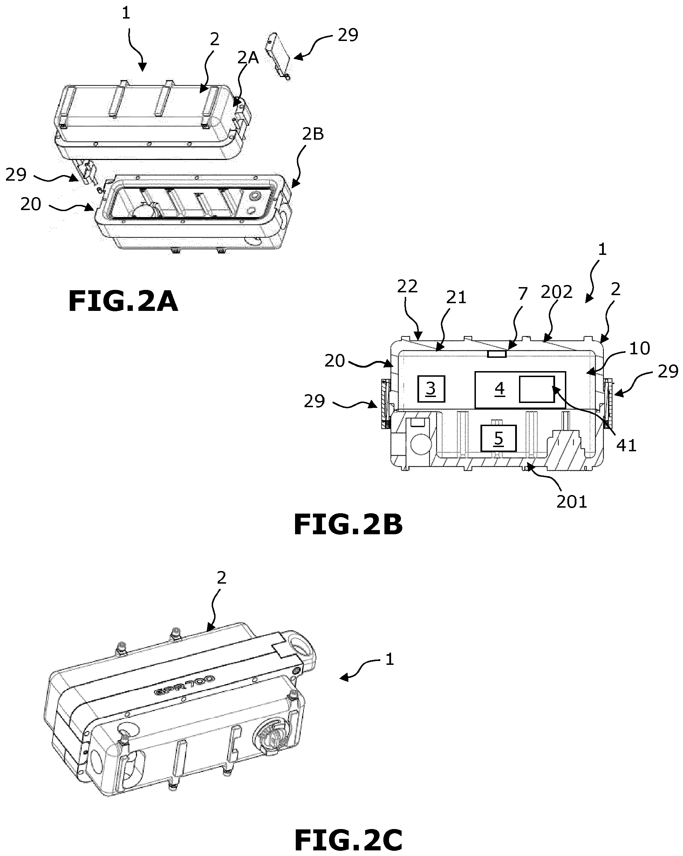

The seismic data acquisition device 1 of Figures 2A, 2B and 2C includes a casing 2 that houses at least part of a data acquisition system 10 in a cavity formed by walls 20 of the casing. The data acquisition system 10 is also referred to as a nodal data acquisition system 10. Indeed, the data acquisition system 10 (or the seismic data acquisition device 1 that includes said data acquisition system 10) is intended to form a node of a network of a survey system, with other nodal data acquisition systems (included in others seismic data acquisition devices). Said at least part of the seismic data acquisition system comprises a battery 3 and a processing unit 4 for seismic data acquisition, and at least one seismic sensor 5, for instance a particle motion sensor. The processing unit 4 may include a processor, and a memory for storing a program to be executed by the processor. The seismic data acquisition system includes a memory system 41 for storing data measured by the at least one seismic sensor 5 and/or seismic data resulting from measured data processed by the processor. The memory system can include one memory or a plurality of memories that can be at least part of the memory 41 of the processing unit 4 or that can be distinct from the memory of the processing unit 4. Said at least one seismic sensor 5 can comprise a MEMS sensor or a geophone.

According to the invention, a deformation sensor is associated to a wall of the casing. The deformation sensor includes at least one load cell 7, or strain gauge, which can be a piezoelectric sensor or a resistive sensor, or any other type of load cell sensitive to a surface acoustic wave (SAW), among deformation sensors. The walls 20 have a face, referred to as an external face 22, that is opposed to said internal face 21 and that is in contact with water when the node is let on an ocean bottom floor. The deformation sensor 7 is fixed to an internal face 21 of a wall 20 of the casing 2 and the deformation sensor is connected with the processing unit 4, thereby enabling to determine the depth at which the ocean bottom seismic data acquisition device (OBN) is placed, by measuring the deformation of the OBN casing. Indeed, the processing unit 4 can be configured to compare the measured deformation of the casing with a database comprising predefined deformation values associated with predefined values of water pressure. The determination in the database of the predefined values of water pressure that corresponds to the measured deformation provides the value of the water pressure that is applied to the OBN casing. Said value of water pressure is representative of the water depth so that the processing unit 4 can determine the water depth of the casing based on the measured deformation of the casing 2. Alternatively, the database can comprise predefined deformation values associated directly with predefined water depth values. The use of a database can be replaced by a calculation formula that provides a water depth value in function of the measured deformation.

The wall to which the deformation sensor 7 is fixed is elastically deformable under water pressure.

Preferably, the deformation sensor 7 is positioned onto a wall 202 of the casing 2 that is opposed to another opposite wall 201 of the casing 2 that is in contact with the ocean bottom floor when the OBN is let on an ocean bottom floor (seabed). According to an embodiment, the part of the wall 202 to which the deformation sensor 7 is fixed has a thickness which is the smallest compared to the thickness of the other wall parts of the casing to which hydrostatic pressure applies.

Alternatively, as can be seen in Figure 2B, if the walls 20 do comprise some reinforcing ribs, deformation sensor 7 is placed on a part of the wall 202 with a uniform thinner thickness (by opposition to the thickness of a zone of the wall that comprises a reinforcing rib), said part being larger that the size of the deformation sensor 7.

According to an embodiment, the part of the wall 202 to which the deformation sensor 7 is fixed, is apart from the edges of said wall to be able to measure a deformation on a part that is sensible to pressure deformation.

In the illustrated embodiments, the casing 2 has two halves 2A, 2B intended to be joint together by an attachment system 29 so as to prevent water from entering the chamber defined by the halves 2A, 2B.

The material of the casing on which the deformation sensor 7 is fixed may be a metallic material such as an aluminum-copper alloy. Other metallic materials may be used. Alternatively, or in combination (hybrid embodiment), the material may be plastic or rubber. According to a preferred embodiment, said material is metallic as the deformation of a metallic material is more predictable than the deformation of a plastic one. In particular, a deformation sensor can be associated with an OBN as disclosed in WO 2021/224683, or in patent application US 18/343.079 filed June26th, 2023 by same assignee.

According to a preferred embodiment, the deformation sensor 7 is able to detect a deformation of the casing as soon as the external pressure (hydrostatic pressure) applied to the casing exceeds a specified value is superior to (exceeds) a given value, when the node is located at a depth for example above 75 meters from the water surface, and the external pressure tends to bend at least a part of the casing to which the deformation sensor 7 is fixed.

The deformation sensor is connected with the processing unit 4, which is also connected to the least one seismic sensor 5, so that the processing unit 4 is able to acquire the value of the deformation measured by the deformation sensor 7 and thus to determine the depth at which the OBN is placed in function of said measured deformation. The deformation measurements are transmitted to the processing unit 4 preferably by wire(s) since the sensor 7 is, like the processing unit 4, located inside the casing.

The deformation sensor and the processing unit 4 thus form at least part of a depth determination system. The determined depth can then be memorized in a memory of the OBN such as a memory of the memory system.

Further electronic components may be included in the casing of the OBN. For example, the OBN can comprise a power and data retrieval management system, for managing the power from the battery 3 and also the data exchange with a base, when the OBN is on shore and is being prepared for deployment. In this regard, the system can be configured to communicate through a port with a power source (not shown) and/or a data server (not shown). The power source can be used to recharge the battery 3 and the data server can be used to receive all the recorded seismic data from the node 1. The port can be closed with a cap, when the node is deployed in water, to prevent the water to reach any electrical contact.

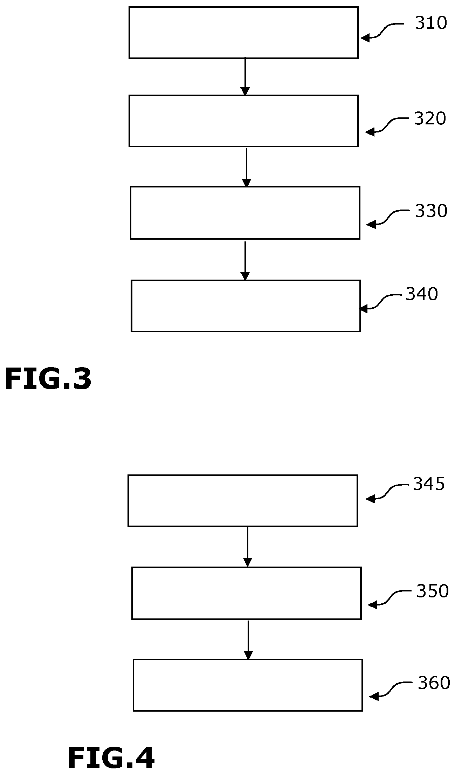

A method for assembling the ocean bottom node 1 is now discussed with regard to Figure 3. The method includes a step 310 of fixing the deformation sensor 7 to an internal face of a part of a wall of the casing. Preferably said part of the wall to which is fixed the deformation sensor 7 is spaced from the edges of the casing 2. The method includes a step 320 of placing the electronic and/or informatic components such as the processing unit 4, the battery 3, the at least one sensor 5, the memory system, as parts of or as module with, the complete nodal data seismic acquisition system 10 inside the casing 2, for instance inside one of the halves 2A, 2B. The deformation sensor 7 is connected to the processing unit 4 at step 330. At step 340, the first half 2A is attached to the second half 2B with the attachment system 29.

A method for seabed seismic data acquisition is now discussed with regard to Figure 4. When in use, at step 345, the seismic data acquisition device 1 is placed on an ocean bottom floor. The deformation sensor 7 measures a signal representative of a deformation of the casing 2 (step 350). The deformation may in particular be a bending of the wall of the casing, on which is fixed the deformation sensor 7, said deformation resulting from the water pressure that the casing undergoes at the bottom of the ocean. The processing unit 4 determines, at step 360, a depth at which the housing is located, according to the deformation signal measured by the deformation sensor. Said depth will be associated with any other data sensed by the OBN, in particular with the seismic data.

The determination of actual depth at which the OBN is located enables to reliably and accurately exploit the seismic data related to the data measured by the at least one seismic sensor. Indeed, the seismic data acquired with the OBN must and the associated depth value at which the OBN acquired these data enables to reconstruct an accurate and reliable image profile of geophysical structures under the ground (subsurface).

The disclosed embodiments provide an ocean bottom node (OBN) that is configured to collect seismic data when deployed below the water surface on the seabed ; and the OBN is configured with a deformation sensor attached to an internal face of a wall of the casing to enable a processing unit to determine the depth of the ocean bottom on the basis of the deformation of the casing measured by the deformation sensor. Although the term "ocean" is used in this application, one skilled in the art would understand that the OBN can be deployed in a lake, pond, brackish water, river, etc., i.e., any body of water. It should be understood that this description is not intended to limit the invention. On the contrary, the embodiments are intended to cover alternatives, modifications and equivalents, which are included in the scope of the invention as defined by the appended claims. Further, in the detailed description of the embodiments, numerous specific details are set forth in order to provide a comprehensive understanding of the claimed invention. However, one skilled in the art would understand that various embodiments may be practiced without such specific details.

Although the features and elements of the present embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

Preferably, the part of the wall of the casing on which the deformation sensor is fixed has a predefined thickness, and the measures provided by the deformation sensor fixed to said wall are calibrated. Calibration of the deformation sensor fixed to the casing of the OBN can be carried out prior to the use of the OBN for example by performing deformation tests in a pressurized chamber. Alternatively, or in addition, the processing unit 4 can be configured to determine the hydrostatic pressure experienced by the casing 2 on the basis of a mathematical modeling of the relationship between the hydrostatic pressure applied to the casing 2 and the deformation of the material of the casing wall to which the deformation sensor 7 is attached.

The deformation behavior of said part of the casing when submitted to hydrostatic pressure being known, the processing unit can include tables, or a calculation module configured to determine a value of water pressure corresponding to a measured deformation value of said part of the casing submitted to the hydrostatic pressure, and to determine the water depth of the OBN based on the determined water pressure. The tables can directly provide a depth value that corresponds to a given deformation value.

Under the effect of pressure, the casing deforms, and therefore the deformation sensor measures the corresponding deformation of the housing. Preferably the deformation of the casing is an elastic deformation in the sense that when the casing is brought out of the water the deformed part returns to its original shape.

This makes it possible to determine the pressure experienced by the casing according to the deformation measured by the deformation sensor.

Such embodiments proposed above, make it possible to use an already existing casing of an OBN and to add a deformation sensor on an inner face of the casing as explained above to determine the water depth of the OBN, without weakening the OBN. Further, the cost of adapting an existing OBN is limited.

## Claims

1. A seismic data acquisition device (1) intended to be placed on an ocean bottom floor, comprising:
- a casing (2) defining a chamber that houses at least part of a seismic data acquisition system (10), also referred to as a nodal seismic data acquisition system;
**characterized in that** the seismic data acquisition device comprises further:
- a deformation sensor (7) fixed on an inner face (21) of a wall (202) of the casing (2) and configured to measure a signal representative of a deformation of the casing (2) to which the deformation sensor (7) is fixed, said deformation resulting from a pressure applied by water to the casing (2) when the seismic data acquisition device (1) is placed in water; and
- a processing unit (4), such as an electronic board, to which the deformation sensor (7) is connected, which is configured to determine a water depth at which the casing (2) is located, according to the signal measured by the deformation sensor (7).

2. The seismic data acquisition device (1) of Claim 1, wherein at least part of the wall (20) of the casing (2) to which the deformation sensor (7) is fixed, is made of a metallic material, such as aluminum.

3. The seismic data acquisition device (1) of Claim 1 or 2, wherein the seismic data acquisition device (1) includes a memory (41) configured to store a database comprising predefined values of water depth, or predefined values of water pressure, associated with predefined values of deformation of the casing (2), and the processing unit (4) is configured to determine the water depth at which the seismic data acquisition device (1) is located in function of the signal measured by the deformation sensor (7) and said database.

4. The seismic data acquisition device (1) of any one of Claims 1 to 3, wherein the deformation sensor (7) comprises a load cell.

5. The seismic data acquisition device (1) of any one of Claims 1 to 4, wherein the deformation sensor (7) comprises at least one of a piezoelectric sensor, a resistive sensor, a sensor sensitive to a surface acoustic wave.

6. The seismic data acquisition device (1) of any one of Claims 1 to 5, wherein the signal measured by the deformation sensor (7) is a signal representative of a bending of the wall (202) of the casing (2) to which the deformation sensor (7) is fixed, by reference to a default position of the wall (202) considered when the casing (2) is out of water.

7. The seismic data acquisition device (1) of any one of Claims 1 to 6, wherein the casing (2) has two halves (412A, 412B) configured to be attached one to the other by an attachment system (29).

8. The seismic data acquisition device (1) of any one of Claims 1 to 7, wherein the wall (202) of the casing to which the deformation sensor (7) is fixed, is a top wall (202) of the casing (2) opposite to a bottom wall (201) of the casing which is intended to come into contact with the ocean bottom floor, when the seismic data acquisition device (1) is placed on the ocean bottom floor.

9. The seismic data acquisition device (1) of any one of Claims 1 to 8, wherein the part of the wall (202) of the casing (2) to which the deformation sensor (7) is fixed, is spaced from the edges of the casing (2).

10. The seismic data acquisition device (1) of Claim 9, wherein the part of the wall (202) of the casing (2) to which the deformation sensor (7) is fixed has a constant thickness.

11. The seismic data acquisition device (1) of any one of Claims 1 to 10, wherein the wall (202) of the casing having at least one zone comprising a rib, the deformation sensor (7) is placed on a part of the wall (202) which is thinner than the zone of the wall that comprises said rib, said part of the wall (202) being larger that the size of the deformation sensor (7).

12. The seismic data acquisition device (1) of any one of Claims 1 to 11, wherein said at least part of the data acquisition system that is housed in the casing (2) includes a management card configured to communicate through a port with a power source and/or a data server on shore, the port being closed with a cap, when the node is deployed in water, to prevent the water to reach any electrical contact.

13. A method for seabed seismic data acquisition, comprising the steps of:
- providing a seismic data acquisition device (1) according to any one of Claims 1 to 12;
- placing (345) the seismic data acquisition device (1) on an ocean bottom floor ;
- measuring (350) a signal representative of a deformation of the casing (2) with the deformation sensor (7), said deformation resulting from the water pressure that the casing (2) undergoes on the ocean bottom floor;
- determining (360) a depth value at which the casing (2) is located according to said signal representative of a deformation of the casing (2) measured by the deformation sensor (7); and
- memorizing said depth value in a memory included in the casing (2).

## Patentansprüche

1. Seismische Datenerfassungsvorrichtung (1), die dazu bestimmt ist, auf einem Meeresboden platziert zu sein, umfassend:
- ein Gehäuse (2), das eine Kammer definiert, die zumindest einen Teil eines seismischen Datenerfassungssystems (10) aufnimmt, auch bezeichnet als ein seismisches Knoten-Datenerfassungssystem;
**dadurch gekennzeichnet, dass** die seismische Datenerfassungsvorrichtung ferner Folgendes umfasst:
- einen Verformungssensor (7), der an einer Innenfläche (21) einer Wand (202) des Gehäuses (2) fixiert und dazu ausgelegt ist, ein Signal zu messen, das eine Verformung des Gehäuses (2) darstellt, an dem der Verformungssensor (7) fixiert ist, wobei die Verformung aus einem Druck resultiert, der durch Wasser auf das Gehäuse (2) ausgeübt wird, wenn die seismische Datenerfassungsvorrichtung (1) im Wasser platziert ist; und
- eine Verarbeitungseinheit (4), wie beispielsweise eine Elektronikplatine, mit der der Verformungssensor (7) verbunden ist, die dazu ausgelegt ist, eine Wassertiefe, in der sich das Gehäuse (2) befindet, gemäß dem durch den Verformungssensor (7) gemessenen Signal zu bestimmen.

2. Seismische Datenerfassungsvorrichtung (1) nach Anspruch 1, wobei zumindest ein Teil der Wand (20) des Gehäuses (2), an dem der Verformungssensor (7) fixiert ist, aus einem metallischen Material, wie beispielsweise Aluminium, hergestellt ist.

3. Seismische Datenerfassungsvorrichtung (1) nach Anspruch 1 oder 2, wobei die seismische Datenerfassungsvorrichtung (1) einen Speicher (41) umfasst, der dazu ausgelegt ist, eine Datenbank zu speichern, die vordefinierte Wassertiefenwerte oder vordefinierte Wasserdruckwerte umfasst, die mit vordefinierten Verformungswerten des Gehäuses (2) assoziiert sind, und wobei die Verarbeitungseinheit (4) dazu ausgelegt ist, die Wassertiefe, in der sich die seismische Datenerfassungsvorrichtung (1) befindet, in Abhängigkeit von dem durch den Verformungssensor (7) gemessenen Signal und der Datenbank zu bestimmen.

4. Seismische Datenerfassungsvorrichtung (1) nach einem der Ansprüche 1 bis 3, wobei der Verformungssensor (7) eine Kraftmesszelle umfasst.

5. Seismische Datenerfassungsvorrichtung (1) nach einem der Ansprüche 1 bis 4, wobei der Verformungssensor (7) einen piezoelektrischen Sensor, einen resistiven Sensor und/oder einen auf eine akustische Oberflächenwelle ansprechenden Sensor umfasst.

6. Seismische Datenerfassungsvorrichtung (1) nach einem der Ansprüche 1 bis 5, wobei das durch den Verformungssensor (7) gemessene Signal ein Signal ist, das eine Biegung der Wand (202) des Gehäuses (2), an der der Verformungssensor (7) fixiert ist, unter Bezug auf eine Standardposition der Wand (202), die bei außerhalb des Wassers befindlichem Gehäuse (2) angenommen wird, darstellt.

7. Seismische Datenerfassungsvorrichtung (1) nach einem der Ansprüche 1 bis 6, wobei das Gehäuse (2) zwei Hälften (412A, 412B) aufweist, die dazu ausgelegt sind, durch ein Befestigungssystem (29) aneinander befestigt zu sein.

8. Seismische Datenerfassungsvorrichtung (1) nach einem der Ansprüche 1 bis 7, wobei die Wand (202) des Gehäuses, an der der Verformungssensor (7) fixiert ist, eine obere Wand (202) des Gehäuses (2) gegenüber einer unteren Wand (201) des Gehäuses ist, die dazu bestimmt ist, mit dem Meeresboden in Kontakt zu kommen, wenn die seismische Datenerfassungsvorrichtung (1) auf dem Meeresboden platziert ist.

9. Seismische Datenerfassungsvorrichtung (1) nach einem der Ansprüche 1 bis 8, wobei der Teil der Wand (202) des Gehäuses (2), an dem der Verformungssensor (7) fixiert ist, von den Kanten des Gehäuses (2) beabstandet ist.

10. Seismische Datenerfassungsvorrichtung (1) nach Anspruch 9, wobei der Teil der Wand (202) des Gehäuses (2), an dem der Verformungssensor (7) fixiert ist, eine konstante Dicke aufweist.

11. Seismische Datenerfassungsvorrichtung (1) nach einem der Ansprüche 1 bis 10, wobei die Wand (202) des Gehäuses mindestens eine Zone aufweist, die eine Rippe umfasst, wobei der Verformungssensor (7) auf einem Teil der Wand (202) platziert ist, der dünner als die Zone der Wand ist, die die Rippe umfasst, wobei der Teil der Wand (202) größer als die Größe des Verformungssensors (7) ist.

12. Seismische Datenerfassungsvorrichtung (1) nach einem der Ansprüche 1 bis 11, wobei der mindestens eine Teil des Datenerfassungssystems, der in dem Gehäuse (2) aufgenommen ist, eine Managementkarte umfasst, die dazu ausgelegt ist, über einen Anschluss mit einer Stromquelle und/oder einem Datenserver an Land zu kommunizieren, wobei der Anschluss mit einer Kappe verschlossen ist, wenn der Knoten im Wasser bereitgestellt ist, um zu verhindern, dass das Wasser einen elektrischen Kontakt erreicht.

13. Verfahren zur seismischen Datenerfassung am Meeresgrund, das die folgenden Schritte umfasst:
- Bereitstellen einer seismischen Datenerfassungsvorrichtung (1) nach einem der Ansprüche 1 bis 12;
- Platzieren (345) der seismischen Datenerfassungsvorrichtung (1) auf einem Meeresboden;
- Messen (350) eines Signals, das eine Verformung des Gehäuses (2) darstellt, mit dem Verformungssensor (7), wobei die Verformung aus dem Wasserdruck resultiert, dem das Gehäuse (2) auf dem Meeresboden ausgesetzt ist;
- Bestimmen (360) eines Tiefenwerts, an dem sich das Gehäuse (2) befindet, gemäß dem durch den Verformungssensor (7) gemessenen Signal, das eine Verformung des Gehäuses (2) darstellt; und
- Speichern des Tiefenwerts in einem Speicher, der im Gehäuse (2) enthalten ist.

## Revendications

1. Dispositif d'acquisition de données sismiques (1) prévu pour être placé sur un fond océanique, comprenant :
- un boîtier (2) définissant une chambre qui loge au moins une partie d'un système d'acquisition de données sismiques (10), également appelé système nodal d'acquisition de données sismiques ;
**caractérisé en ce que** le dispositif d'acquisition de données sismiques comprend en outre :
- un capteur de déformation (7) fixé sur une face intérieure (21) d'une paroi (202) du boîtier (2) et configuré pour mesurer un signal représentatif d'une déformation du boîtier (2) auquel est fixé le capteur de déformation (7), ladite déformation résultant d'une pression appliquée par de l'eau sur le boîtier (2) lorsque le dispositif d'acquisition de données sismiques (1) est placé dans de l'eau ; et
- une unité de traitement (4), telle qu'une carte électronique, à laquelle est connecté le capteur de déformation (7), qui est configurée pour déterminer une profondeur d'eau à laquelle est situé le boîtier (2), selon le signal mesuré par le capteur de déformation (7).

2. Dispositif d'acquisition de données sismiques (1) de la revendication 1, dans lequel au moins une partie de la paroi (20) du boîtier (2), auquel est fixé le capteur de déformation (7), est faite d'un matériau métallique, tel que de l'aluminium.

3. Dispositif d'acquisition de données sismiques (1) de la revendication 1 ou 2, dans lequel le dispositif d'acquisition de données sismiques (1) inclut une mémoire (41) configurée pour stocker une base de données comprenant des valeurs prédéfinies de profondeur d'eau, ou des valeurs prédéfinies de pression d'eau, associées à des valeurs prédéfinies de déformation du boîtier (2), et l'unité de traitement (4) est configurée pour déterminer la profondeur d'eau à laquelle est situé le dispositif d'acquisition de données sismiques (1) en fonction du signal mesuré par le capteur de déformation (7) et de ladite base de données.

4. Dispositif d'acquisition de données sismiques (1) de l'une quelconque des revendications 1 à 3, dans lequel le capteur de déformation (7) comprend une cellule de charge.

5. Dispositif d'acquisition de données sismiques (1) de l'une quelconque des revendications 1 à 4, dans lequel le capteur de déformation (7) comprend au moins un capteur parmi un capteur piézoélectrique, un capteur résistif, un capteur sensible à une onde acoustique de surface.

6. Dispositif d'acquisition de données sismiques (1) de l'une quelconque des revendications 1 à 5, dans lequel le signal mesuré par le capteur de déformation (7) est un signal représentatif d'une flexion de la paroi (202) du boîtier (2) auquel est fixé le capteur de déformation (7), en référence à une position par défaut de la paroi (202) considérée lorsque le boîtier (2) est hors de l'eau.

7. Dispositif d'acquisition de données sismiques (1) de l'une quelconque des revendications 1 à 6, dans lequel le boîtier (2) a deux moitiés (412A, 412B) configurées pour être attachées l'une à l'autre par un système d'attache (29).

8. Dispositif d'acquisition de données sismiques (1) de l'une quelconque des revendications 1 à 7, dans lequel la paroi (202) du boîtier auquel est fixé le capteur de déformation (7), est une paroi supérieure (202) du boîtier (2) opposée à une paroi inférieure (201) du boîtier qui est prévue pour entrer en contact avec le fond océanique, lorsque le dispositif d'acquisition de données sismiques (1) est placé sur le fond océanique.

9. Dispositif d'acquisition de données sismiques (1) de l'une quelconque des revendications 1 à 8, dans lequel la partie de la paroi (202) du boîtier (2), auquel est fixé le capteur de déformation (7), est espacée des bords du boîtier (2).

10. Dispositif d'acquisition de données sismiques (1) de la revendication 9, dans lequel la partie de la paroi (202) du boîtier (2), auquel est fixé le capteur de déformation (7), a une épaisseur constante.

11. Dispositif d'acquisition de données sismiques (1) de l'une quelconque des revendications 1 à 10, dans lequel la paroi (202) du boîtier a au moins une zone comprenant une nervure, le capteur de déformation (7) est placé sur une partie de la paroi (202) qui est plus mince que la zone de la paroi qui comprend ladite nervure, ladite partie de la paroi (202) étant plus grande que la taille du capteur de déformation (7).

12. Dispositif d'acquisition de données sismiques (1) de l'une quelconque des revendications 1 à 11, dans lequel ladite au moins partie du système d'acquisition de données qui est logé dans le boîtier (2) inclut une carte de gestion configurée pour communiquer, par le biais d'un orifice, avec une source électrique et/ou un serveur de données à terre, l'orifice étant fermé avec un bouchon, lorsque le nœud est déployé dans de l'eau, pour empêcher l'eau d'atteindre tout contact électrique.

13. Procédé pour acquisition de données sismiques en fond marin, comprenant les étapes suivantes :
- la fourniture d'un dispositif d'acquisition de données sismiques (1) selon l'une quelconque des revendications 1 à 12 ;
- le placement (345) du dispositif d'acquisition de données sismiques (1) sur un fond océanique ;
- la mesure (350) d'un signal représentatif d'une déformation du boîtier (2) avec le capteur de déformation (7), ladite déformation résultant de la pression d'eau que le boîtier (2) subit sur le fond océanique ;
- la détermination (360) d'une valeur de profondeur à laquelle est situé le boîtier (2) selon ledit signal représentatif d'une déformation du boîtier (2) mesurée par le capteur de déformation (7) ; et
- la mémorisation de ladite valeur de profondeur dans une mémoire incluse dans le boîtier (2).
